# EUROPÄISCHE PATENTSCHRIFT

(11) **EP 0 264 593 B1**
(45) Veröffentlichungstag und Bekanntmachung des Hinweises auf die Patenterteilung: **04.05.1994**
(21) Anmeldenummer: 87112621.5
(22) Anmeldetag: 29.08.1987
(51) Int. Cl.: C02F 5/02, C02F 1/48

(54) **Vorrichtung zur Eliminierung von Kalkablagerungen in Wasserleitungssystemen**
Apparatus for scale removal from water-pipes
Dispositif pour éliminer les dépôts de tartre dans les conduites d'eau

(30) Priorität: 23.09.1986 CH 3789/86; 04.05.1987 CH 3789/86
(43) Veröffentlichungstag der Anmeldung: 27.04.1988
(73) Patentinhaber: Bühler, Anton, CH-8173 Riedt b. Neerach (CH)
(72) Erfinder: Bühler, Anton, CH-8173 Riedt b. Neerach (CH)
(74) Vertreter: Fillinger, Peter

(56) Entgegenhaltungen:
- DE-A- 1 944 763
- GB-A- 482 141
- US-A- 3 486 999
- US-A- 3 974 071

## Beschreibung

Die Erfindung betrifft eine Vorrichtung gemäss dem Oberbegriff des Patentanspruchs 1.

Derartige Wasserleitungssysteme können der Versorgung von Einrichtungen und Maschinen wie Armaturen, Waschmaschinen, Heizkessel, Boiler, Kaffeemaschinen, sanitäre Anlagen und ähnlichen Geräten dienen. Insbesondere bei Leitungswasser mit hohem Kalkgehalt bilden sich in den obenerwähnten Einrichtungen und Maschinen Kalkrückstände und feste Kalkablagerungen, welche den Wasserdurchfluss sowie das richtige Funktionieren der Einrichtungen stark behindern können, und welche nur schwer und unter grossen Kosten zu beseitigen sind.

Zur Beeinflussung dieser nachteiligen Erscheinungen schlägt die DE-A-1944763 vor, das Koagulieren, Körnigwerden und Abscheiden von in Wasser dispergierten oder gelösten Stoffen dadurch zu verändern, dass um die die Dispersion oder Lösung führende Leitung eine Manschette aus einem beliebigen organischen oder anorganischen Material gelegt, vorzugsweise festgespannt wird. Aufgrund dieser allgemeinen Lehre wurde die Kalkablagerung an den Heizstäben einer Warmwasseraufbereitungsanlage mittels einer Holzmanschette untersucht. Selbst nach monatelangem Einsatz zeigte diese Holzmanschette keine Wirkung.

Zur Verhinderung oder mindestens Eindämmung der festen Kalkablagerungen in Wasserleitungen sind heute auf dem Markt verschiedene Massnahmen und Vorrichtungen bekannt und in Anwendung.

Eine Kategorie dieser Vorrichtungen arbeitet nach einer chemischphysikalischen Methode: Bei dieser Methode wird dem Wasser mittels Jonenaustauscher Calcium entzogen und durch Natriumjonen ersetzt. Der Nachteil dieses Gerätes ist die Wartung, die Beschaffungs- und Unterhaltskosten. Wird das Gerät nicht regelmässig gewartet und die Dosierung nicht immer wieder entsprechend dem aktuellen Härtegrad des Wassers einreguliert, so hat das zur Folge, dass die Wasserleitungen durchrosten und die Umwelt unnötig belastet wird.

Eine zweite Kategorie der erwähnten Vorrichtungen bedient sich einer elektrophysikalischen Methode. Bei dieser Methode werden die im Wasser gelösten Härtebildner mittels elektrischer Induktionsfelder verändert. Der Nachteil dieser Geräte ist, dass ein direkter Eingriff ins bestehende Leitungssystem gemacht werden muss. Das Gerät braucht einen elektrischen Anschluss und eine regelmässige Wartung.

Sowohl Jonenaustauscher wie auch die elektrophysikalischen Apparate haben den Nachteil, dass sie Einbauten innerhalb der Wasserleitung erfordern, die Brutstätten für Keime bilden können, die insbesondere bei längeren Verbrauchsphasen, wie Ferien und dgl., ungehindert Keime zurück ins öffentliche Versorgungsnetz streuen.

Die vorliegende Erfindung stellt sich die Aufgabe, eine Vorrichtung der eingangs genannten Art zu schaffen, welche die Schäden kalkhaltigen Wassers mildern, ohne dadurch das öffentliche Leitungswasser mit einer Keimkontamination zu gefährden. Erfindungsgemäss wird diese Aufgabe gelöst durch die kennzeichnenden Merkmale des Anspruchs 1.

Anhand der beiliegenden schematischen Zeichnung wird die Erfindung beispielsweise erläutert. Es zeigen:
- Fig. 1: eine Ansicht einer Vorrichtung und
- Fig. 2: eine perspektivische Ansicht eines Wasserversorgungssystems mit einer Vorrichtung gemäss Fig. 1.

Am Eingang des Wasserleitungssystems, also vorzugsweise beim Wassereintritt ist ein Metallkörper 3 vollständig umschliessend um einen Rohrabschnitt 1 der Wasserleitung gelegt. Der Rohrabschnitt besteht aus einem Eisenwerkstoff und ist vorzugsweise verzinkt. Der Metallkörper 3 besteht aus den beiden Hälften 3a und 3b, welche einander in der Axialebene 3c berühren und mittels der Schrauben 4 zusammengehalten, und auf der Wasserleitung durch Kraftschluss fixiert werden. Vorzugsweise ist der Metallkörper 3 ein zur Wasserleitung konzentrischer Zylinder, jedoch sind auch andere Körperformen wie Prismen, Würfel oder Kugeln möglich. Der Metallkörper 3 besteht aus einer Aluminiumlegierung mit den Legierungselementen Kupfer und/oder Silizium, vorzugsweise in eutektischer oder naheutektischer Zusammensetzung. Besonders geeignet ist eine Legierung der Zusammensetzungen 88,85 % Al + 8 % Si + 3 % Cu + 0,15 % Cr. Der Metallkörper 3 wird vorzugsweise im Gussverfahren als zylindrischer Rohling hergestellt. Nebst den dadurch auftretenden radialen Erstarrungsstrukturen werden ihm zusätzliche Erstarrungsstrukturen in Längsrichtung durch eine gerichtete Erstarrung aufgezwungen. Diese vorteilhaften Erstarrungsstrukturen bewirken', dass der Rohling im Stranggiessverfahren günstig hergestellt werden kann. Die fertige Form wird durch spahnabhebende Bearbeitung des zylindrischen Rohlings erreicht.

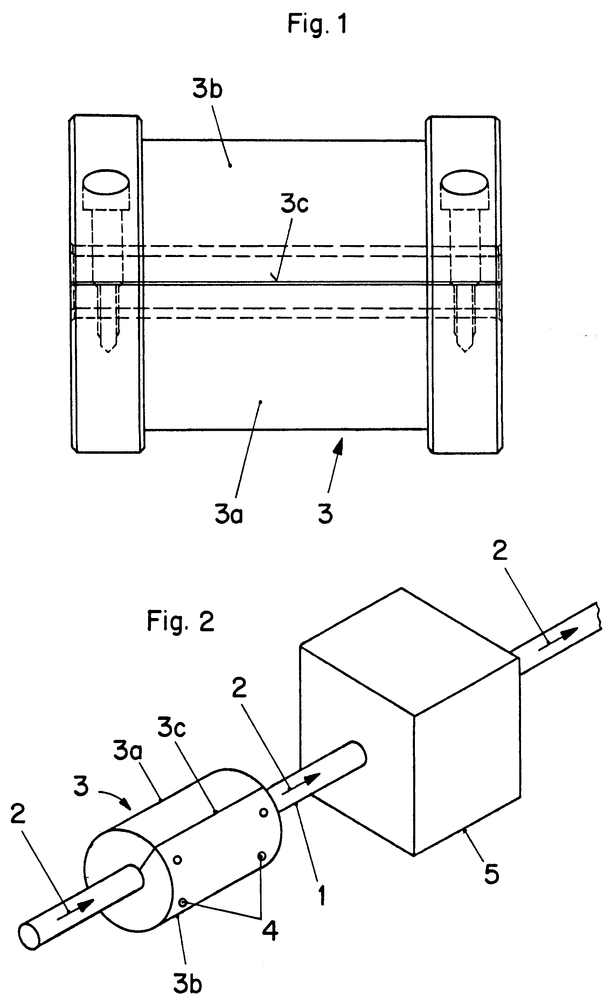

Dieser, die Wasserleitung umschliessende Metallkörper 3 hat die Eigenschaft, das in Richtung der Pfeile 2 durchfliessende Wasser und die in Fig. 1 schematisiert als strichpunktierter Würfel 5 gezeichneter Geräte und Wasserleitungssysteme wie beispielsweise Waschmaschinen, Boiler oder Heizkessel so zu beeinflussen oder zu verändern, dass in diesen Geräten eine starke Kalkablagerung weitgehend verhindert wird.

Dieser Beeinflussungs-Effekt hat sich empirisch, in vielen Anlagen ausprobiert, als zutreffend erwiesen.

Der Metallkörper 3 ist in die zwei Teile 3a und 3b aufgeteilt, um ihn leicht auf bestehende Wasserleitungen auf- setzen und mittels der Schrauben 4 befestigen zu können.

Die erfindungsgemässe Vorrichtung ist völlig verschleissfrei, wartungsfrei und benötigt weder elektrische Energie noch irgendwelche chemischen Zusatzmittel.

Die Bohrung des als Zylinder geformten Metallkörpers 3 kann an den Durchmesser der Wasserleitung angepasst werden. Der Zylinderdurchmesser liegt vorzugsweise im Bereich zwischen 6 cm und 35 cm und dessen Länge vorzugsweise zwischen 12 cm und 50 cm.

Der sich absetzende Kalk hat eine lockere Struktur, die der erosiven Wirkung des fliessenden Wassers nicht standhält. In den Leitungen stellt sich daher ein Gleichgewichtszustand ein, in dem die Kalkschicht sehr dünn ist und erforderlichenfalls durch Bürsten, Klopfen und dgl. mechanisch leicht entfernt werden kann.

## Patentansprüche

1. Vorrichtung zur Reduzierung von Kalkablagerungen in einem Wasserleitungssystem und daran angeschlossenen Verbrauchseinrichtungen (5), das mindestens eingangsseitig einen Rohrabschnitt (1) aus einem Eisenwerkstoff aufweist, gekennzeichnet durch einen im Bereich des genannten Rohrabschnitts (1) anzubringenden, diesen Rohrabschnitt voll umschliessenden Metallkörper (3), der aus einer Aluminiumlegierung mit wenigstens einem der Legierungselemente Silizium und/oder Kupfer besteht.

2. Vorrichtung nach Anspruch 1, dadurch gekennzeichnet, dass die Aluminiumlegierung eine eutektische oder naheutektische Legierung ist.

3. Vorrichtung nach Anspruch 1 oder 2, dadurch gekennzeichnet, dass die Aluminiumlegierung 88,85 % Aluminium, 8 % Silizium, 3 % Kupfer und 0,15 % Chrom aufweist.

4. Vorrichtung nach einem der Ansprüche 1 bis 3, dadurch gekennzeichnet, dass der Metallkörper (3) sowohl axparallel zum Rohrabschnitt (1) als auch radial Strukturen einer gerichteten Erstarrung aufweist.

5. Vorrichtung nach einem der Ansprüche 1 bis 4, dadurch gekennzeichnet, dass der Metallkörper (3) in mindestens einer Achsialebene in mindestens zwei Teile (3a, 3b) geteilt ist, welche den Rohrabschnitt (1) konzentrisch umschliessen.

6. Vorrichtung nach Anspruch 5, dadurch gekennzeichnet, dass die Teile (3a, 3b) des Metallkörpers mittels Schrauben fest verbindbar und auf den Rohrabschnitt aufspannbar ist.

7. Vorrichtung nach Anspruch 6, dadurch gekennzeichnet, dass der Metallkörper (3) eine im wesentlichen zylindrische Form und eine axiale Bohrung aufweist, dass die Bohrung dem Durchmesser des Rohrabschnittes angepasst ist und der Aussendurchmesser des Metallkörpers (3) 6 bis 30 cm und die Länge 12 bis 50 cm betragen.

8. Wasserleitungssystem zur Versorgung angeschlossener Verbrauchseinrichtungen mit einer Vorrichtung nach einem der Ansprüche 1 bis 7, dadurch gekennzeichnet, dass zur Reduzierung von Kalkablagerungen in den Verbrauchseinrichtungen (5) das Leitungssystem eingangsseitig einen Rohrabschnitt (1) aus einem Eisenwerkstoff aufweist, dass am genannten Rohrabschnitt (1) ein ihn voll umschliessender Metallkörper (3) angeordnet ist und dass der Metallkörper (13) aus einer Aluminiumlegierung mit wenigstens einem der Legierungselemente Silizium und/oder Kupfer besteht.

## Claims

1. Device for reducing limescale deposits in a plumbing system and consumer appliances (5) connected thereto, said plumbing system having at least on the incoming side a pipe section (1) made of ferrous material, characterised by a metallic body (3) to be mounted in the vicinity of said pipe section (1) and totally enclosing said pipe section, and which consists of an aluminium alloy with at least one of the alloying elements silicon and/or copper.

2. Device according to claim 1, characterised in that the aluminium alloy is a eutectic or near-eutectic alloy.

3. Device according to claim 1 or 2, characterised in that the aluminium alloy contains 88.85% aluminium, 8% silicon, 3% copper and 0.15% chromium.

4. Device according to any of claims 1 to 3, characterised in that the metallic body (3) contains structures of oriented solidification both parallel to the axis of the pipe section (1) and radially.

5. Device according to any of claims 1 to 4, characterised in that the metallic body (3) is divided in at least one axial plane into at least two parts (3a, 3b) which concentrically enclose the pipe section (1).

6. Device according to claim 5, characterised in that the parts (3a, 3b) of the metallic body can be firmly connected using screws and clamped onto the pipe section.

7. Device according to claim 6, characterised in that the metallic body (3) is substantially cylindrical in shape and incorporates an axial bore, that the bore matches the diameter of the pipe section and the external diameter of the metallic body (3) is 6 to 30 cm and its length 12 to 50 cm.

8. Plumbing system for supplying consumer appliances connected thereto, equipped with a device according to any of claims 1 to 7, characterised in that to reduce limescale deposits in the consumer appliances (5) the plumbing system has on its incoming side a pipe section (1) of ferrous material, that disposed on said pipe section (1) is a metallic body (3) which completely encloses it, and that the metallic body (3) consists of an aluminium alloy with at least one of the alloying elements silicon and/or copper.

## Revendications

1. Dispositif pour réduire les dépôts de tartre dans un système de conduite d'eau et dans les installations utilisatrices (5) reliées à ce système, et qui comporte au moins en entrée un segment de tube (1) en une matière ferreuse, dispositif caractérisé par un corps métallique (3) destiné à être placé dans la zone du segment de tube (1) et entourant complètement ce segment de tube, ce corps métallique se composant d'un alliage d'aluminium avec au moins l'un des éléments d'alliage silicium et/ou cuivre.

2. Dispositif selon la revendication 1, caractérisé en ce que l'alliage d'aluminium est un alliage eutectique ou proche d'un alliage eutectique.

3. Dispositif selon la revendication 1 ou 2, caractérisé en ce que l'alliage d'aluminium se compose de 88,85 % d'aluminium, 8 % de silicium, 3 % de cuivre et 0,15 % de chrome.

4. Dispositif selon l'une des revendications 1 à 3, caractérisé en ce que le corps métallique (3) possède des structures à solidification orientée à la fois parallèlement à l'axe du tube (1) et radialement.

5. Dispositif selon l'une des revendications 1 à 4, caractérisé en ce que le corps métallique (3) est divisé en au moins deux parties (3a, 3b) dans un plan axial, ces parties entourant concentriquement le segment de tube (1).

6. Dispositif selon la revendication 5, caractérisé en ce que les parties (3a, 3b) du corps métallique sont susceptibles d'être reliées solidairement par des vis, et se fixent sur le segment de tube.

7. Dispositif selon la revendication 6, caractérisé en ce que le corps métallique (3) présente une forme essentiellement cylindrique et un perçage axial, le perçage étant adapté au diamètre du segment de tube, et le diamètre extérieur du corps métallique (3) est compris entre 6 et 30 cm tandis que sa longueur est comprise entre 12 et 50 cm.

8. Système de conduite d'eau pour l'alimentation d'installations utilisatrices raccordées, comportant un dispositif selon l'une des revendications 1 à 7, caractérisé en ce que, pour réduire les dépôts de tartre dans les installations utilisatrices (5), le système de conduite présente à l'entrée un segment de tube (1) en une matière ferreuse, et en ce que sur le segment de tube (1) est prévu un corps métallique (3) qui l'entoure complètement, ce corps métallique (3) étant en un alliage d'aluminium avec au moins l'un des éléments d'alliage silicium et/ou cuivre.
